# EUROPEAN PATENT SPECIFICATION

(11) **EP 1 072 005 B1**
(45) Date of publication and mention of the grant of the patent: **17.12.2008**
(21) Application number: 99920713.7
(22) Date of filing: 09.04.1999
(51) Int. Cl.: G06F 17/30

(54) **NETWORK SERVER AND METHOD FOR ADAPTING REFERENCE DATA**
NETZWERKANBIETER UND VERFAHREN UM REFERENZDATEN ANZUPASSEN
SERVEUR DE RESEAU ET PROCEDE D'ADAPTATION DE DONNEES DE REFERENCE

(30) Priority: 17.04.1998 NL 1008926
(43) Date of publication of application: 31.01.2001
(73) Proprietor: Koninklijke KPN N.V., 9726 AE Groningen (NL)
(72) Inventor: JONKER, Willem, NL-9617 EA Harkstede (NL)
(74) Representative: Wuyts, Koenraad Maria
(86) International application number: PCT/EP1999/002639
(87) International publication number: WO 1999/054832

(56) References cited:
- LINDE P L: "HTML AND MOSAIC: A TASTE FOR MORE. USE OF HYPER TEXT MARK-UP LANGUAGE (HTML) FOR THE DEVELOPMENT OF INTERACTIVE MULTIMEDIA THROUGH WORLD WIDE WEB (WWW)" PROCEEDINGS OF THE ANNUAL CONFERENCE OF THE INTERNET SOCIETY IN CONJUNCTION WITH THE EUROPEAN NETWORKING CONFERENCE, vol. 1, 1 January 1994 (1994-01-01), pages 212-01-212-07, XP000567441
- BENBOW S M P: "File not found: the problems of changing URLs for the World Wide Web" INTERNET RESEARCH: ELECTRONIC NETWORKING APPLICATIONS AND POLICY, 1998, MCB UNIVERSITY PRESS, UK, vol. 8, no. 3, pages 247-250, XP002113396 ISSN: 1066-2243

## Description

The invention relates to a network server for adapting reference data, as well as to a method for adapting reference data.

Within computer networks, like e.g. the Internet and World Wide Web, reference data appear frequently, like e.g. URL links. These reference data refer to information, which is present elsewhere within the network, and by that make out a very important part of the network. With such reference data, the problem exists that the information, such as e.g. page information, to which is referred, can be changed, e.g. by moving or removing the page information, without changing the reference data, so that these are no longer correct. Since changes of page information occur frequently, this leads to many reference data no longer being correct. On use of a reference data having become incorrect, the user is confronted with an error message and is not able to obtain the desired page information. Every next user of this reference data having become incorrect receives such an error message as well, so that the number of users experiencing inconvenience can increase considerably, especially with frequently used reference data. At the same time, the data traffic that is generated by this forms a disadvantageous additional load of the network.

Methods for improving the consistency of reference data are known from practice for application within a single part of a network, like e.g. a server. These operate by keeping a data file of all reference data present within the server and the corresponding page information and allowing changes therein only if the corresponding reference data and page information are keeping with. In this way, the consistency within a single server, the so-called "loyal consistency", can be guaranteed.

These known methods function only within the scope of a single server. In case the server is part of a network consisting of a number of servers, the known systems are no longer sufficient, as references between servers among themselves cannot be kept in this known way.

"HTML and MOSAIC: A Taste for more" of P.L. Linde, Proceedings of the annual conference of the internet society in conjunction with the European Network Conference, vol. 1, 1 January 1994, pages 212-01 - 212-07 suggests a new version of HTML that would contain a URL, management system that adjusts all URL automatically when changes in the information structure are being made in order to improve the maintenance and management of information within WWW environment.

"File not found: the problems of changing URL's for the World Wide Web" of S.M.P. Benbow, Internet Research: Electronic Networking Applications and Policy, Vol. 8, No. 3, pages 247-250 suggests that, ideally, hypetext links need to be checked periodically either manually or using software, such as MOM-spider.

"Maintaining distributed hypertext infostructures: Welcome to MOMspider's Web of R.T. Fielding discloses a spider that can periodically traverse a list of webs, check each web for any changes which may require its owner's attention and build a specific index document that lists out the attributes and connections of the web in a form that can itself be traversed in a hypertext document.

The invention aims at providing a network server and a method for adapting reference data, in which the said disadvantages are overcome. This aim is reached by the network server defined in claim 1, the method defined in claim 6, the computer network of claim 10 and the web browser of claim 11.

Owing to the fact that the presence of page information is continually checked by means of the status indicator and the reference data is adapted on the basis hereof if this is no longer correct, the consistency of the complete network system is improved on every use. At the same time, the amount of communication traffic caused by reference data having become incorrect is reduced and inconvenience to the user is avoided.

Special embodiments and developments of the device according to the invention are described in the dependent claims.

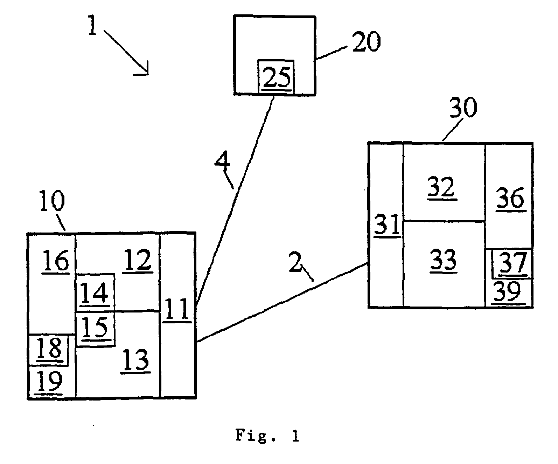

In the following, the invention is illustrated in more detail and explained by reference to an exemplary embodiment, in which reference is made to the drawing, the single figure of which shows schematically an example of a communication network provided with a network server for adapting reference data.

In the exemplary embodiment shown, a network server according to the invention is implemented as a web server 10, such as e.g. a central computer, which is provided with network management software in a way known in the art. The web server 10 is, as shown, provided with a port 11, reception means 12, transmission means 13 and a memory 16. Besides, the web server 10 is provided with adaptation means 14, for adapting the data stored in the memory 16, and verification means 15 for verifying data. The web server 10 is connected in a way known in the art via port 11 to one ore more client terminals, symbolised by a terminal 20, by means of a communicative connection 4 and via a port 11 by means of a communicative connection 2 to one or more second network servers, symbolised by a second web server 30. In a way comparable to web server 10, the web server 30 is provided with a port 31, reception means 32, transmission means 33 and a memory 36. At the same time, the web server 30 is provided with network management software. The web server 30, the terminal 20 and the connections 2 and 4 belong to a communication network 1, to which the web server 10 is connected. The web servers 10 and 30 can in a way known in the art, also be connected to other terminals and servers, which belong to the Internet. The terminal 20 is provided with a communications programme, such as e.g. an Internet web browser 25. The terminal 20 can be e.g. a workstation, a personal computer or a lap top computer. The connections 2 and 4 between the terminal 20 and the servers 10 and 30 can be implemented in a way known in the art by e.g. electrical and fibre optics cables and ether connections and can also comprise other networks, including local and publicly accessible networks.

Within e.g. the Internet, information is displayed in the form of page information according to the HTML protocol. Reference data are implemented within this protocol in the form of URL links, which refer to page information being present elsewhere in the network. In an exemplary embodiment, a reference data in the form of a URL link 18 can be stored in a certain memory section of the memory 16 of web server 10, in which the URL link is included in page information which is stored in the form of a web page based upon HTML 19.

In the memory 36 of the Internet web server 30 page information is stored in the form of a web page based upon HTML 39. The web page 39 comprises a status indicator 37, such as e.g. a tag according to the HTML protocol.

The status indicator 37 may e.g. comprise two indicators; a move indicator and a cancel indicator. The move indicator indicates whether the web page concerned has been moved to another location, and comprises a new location address. Besides, other data can be included, such as e.g. a date or a reason. The cancel indicator indicates whether the web page concerned has been cancelled. The cancel indicator can also contain other data, such as e.g. a date or a reason. The well-known HTML protocol is for this purpose expanded with corresponding instructions, indicated by e.g. "moved" and "deceased" In a similar way, other indicators, such as e.g. those for indicating a provisional version or temporary unavailability can be included as well.

If a web page is cancelled or moved, a temporary web page is stored during a certain period of time at the original address in the Internet network server in question, which is provided with a status indicator 37 with the relevant information concerned. The length of this period can be adjusted according to the specific circumstances. For a customary application on the Internet a length of two months is appropriate. After this period the temporary page is removed. In this way, the memory space taken up by web pages can be limited.

The web server 10 is provided with adaptation means 14 for adapting the reference data on the basis of the status indicator. On the basis of a status indicator 37 found, comprising a cancel or move indicator, the web server 10 can adapt the reference data, such as URL link 18 on web page 19, by replacing the old address by the new address or by removing the URL link in case of cancellation of the page concerned. If the status indicator 37 is provided with a date, it is possible in an advantageous embodiment to take into account a future move or cancellation with this adaptation.

In the operational state, a user makes contact with the web server 10 by means of the web browser, in a way known in the art. At this, the user finds the URL link 18 on web page 19. The address information present in the URL link 18 indicates that the corresponding web page 39 is present in the web server 30. The terminal 20 makes contact, in a way known in the art, with the web server 30 via the web browser 25 as well, where the web page in question 39 is present in the memory 36, and the web server 30 passes the web page 39 on to the terminal 20. On the web page 39 the status indicator 37 has been put in. The terminal 20 passes the information of the status indicator 37 via the web browser 25 on to a web server 10, in which this can take place manually, by instruction of the user, or automatically. In the latter case, the web browser 25 has been implemented in such a way that the passing on of the status indicator 37 takes place without notice to the user. The adaptation means 14 of the web server 10 adapt the URL link 18 in the memory 16 on the basis of the information of the status indicator 37. In case the status indicator 37 contains a cancel indicator, the URL link is removed. In case the status indicator contains a move indicator, the URL link 18 is provided with the new address. In this way other URL links can be checked and adapted as well. By use of the invention the consistency of the whole network is improved, particularly for the URL links that are used relatively frequently. Preferably, the web server 10 is arranged in such a way that the adaptation routines take place without a user of the client terminal 20 having to take note of this. In this way, the convenience of use is improved.

In a further, advantageous embodiment of the invention, the web server 10 is furthermore equipped with verification means 15 for verifying at the web server 30 the correctness of the status indicator 37 sent by the web browser 25 of terminal 20. After all, it is conceivable that the web browser passes on incorrect status indicators to the web server 10. These means 15 are implemented in such a way that, before the web server 10 adapts the URL link 18 by means of the adaptation means 14 on the basis of a status indicator 37, the web server 10 first retrieves the status indicator 37 from the web server 30 via the connection 2, in a way known as such via the port 11 and the transmission means 13 and the reception means 12. On the basis of the status indicator 37, which is obtained by the web server 10 itself from the web server 30, the URL link 18 is adapted.

In a further embodiment of the invention the incorrect URL links are not directly adapted, but are the data of incorrect URL links stored in a memory file within the memory 16 of the server 10. A message is sent to the owner of a page with an incorrect URL link with the request to adapt the incorrect URL link concerned. The owner can adapt the URL links at his own convenience, after which he informs the server of the corrections so that the data can be removed from the file. Besides, the owner can permit the server to adapt his web page, which is stored in the memory.

Before the incorrect URL link is adapted, information to the effect that the URL link is no longer correct is passed on to the user on using this incorrect URL link and an alternative address is offered as an option. The user can adjust his Internet browser in such a way that in case of a spotted incorrect URL link, the Internet browser always uses the offered alternative address in order to improve the convenience of use in this way. In this way the rights of the owner of the web page can be guaranteed, while on the other hand the factual consistency of the network for the user remains guaranteed.

The connections 2 and 4 are not limited to the mentioned examples, but can comprise all devices that are suitable for communication between computers, including the Internet. Besides, it is possible to use non-real-time connections as embodiment of the connections 2 and 4.

Though in the exemplary embodiment the invention is described as an application for the Internet, the invention is not limited to this. The invention can e.g. be applied within other computer networks.

## Claims

1. A network server for adapting reference data, such as URL links, comprising at least a port (11) for connection to a communication network (1), which is communicatively connected to at least a client terminal (20) and to at least a second server (30), a memory (16) with a memory section for storage of reference data to page information in other servers, reception means (12) for receiving messages via the at least one port (11) and transmission means (13) for transmitting messages, in which in the memory (16) a reference data (18) to page information (39) present in the at least one second server (30) is stored, in which the network server (10) furthermore is equipped for transmitting the reference data (18) via the at least one port (11) from the memory (16) to the at least one client terminal (20), **characterised in that** the network server (10) furthermore is equipped for receiving page information (39) belonging to the reference data (18) from the memory (36) of the at least one second server (30) via the at least one port (11) of the at least one client terminal (20), and **in that** the network server (10) is provided with adaptation means (14) which are equipped for adapting the reference data (18) in the memory (16) in response to receiving a status indicator (37) from the client terminal included in the received page information (39).

2. A network server according to claim 1, **characterised in that** the network server (10) is equipped with verification means (15) for verifying at the at least one second server (30) the correctness of the status indicator (37) received via the at least one client terminal (20).

3. A network server according to claim 1 or 2, **characterised in that** the network server (10) is equipped for reading of a move indicator included in the status indicator (37), provided with a new reference data.

4. A network server according to one of the previous claims, **characterised in that** the network server (10) is equipped for reading of a cancel indicator included in the status indicator (37).

5. A network server according to one of the previous claims, **characterised in that** the network server (10) is equipped for obtaining permission of the owner of the reference data (18) for its adaptation.

6. A method for adapting reference data, such as URL links, which are stored within a memory (16) of a network server (10), which belongs to a communication network (1) with at least a client terminal (20) and at least a second server (30), **characterised in that** the network server (10) receives page information (39) originating from the at least one client terminal (20) belonging to a reference data (18), which is stored in the memory (16), and **in that** the network server (10) adapts the reference data (18) in the memory (16) in response to receiving a status indicator (37) from the client terminal included in the page information (39).

7. A method according to claim 6, **characterised in that** the network server (10) verifies the correctness of the status indicator (37) received via the at least one client terminal (20) at the at least one second server (30).

8. A method according to claim 6 or 7, **characterised in that** the network server obtains permission from the owner of the reference data (18) for its adaptation.

9. A method according to one of the claims 6-8, **characterised in that** the at least one client terminal (20) automatically sends the page information (39) to the network server (10).

10. A computer network, provided with at least a network server (10) according to one of the claims 1-5, at least a second network server (30) and at least a client terminal (20).

11. A web browser (25) of a client terminal (20) for use with the network server (10) according to one or more of the claims 1-5 configured for automatically passing the status indicator to the network servers.

## Patentansprüche

1. Netzwerkserver zum Anpassen von Verweisdaten wie etwa URL-Links, umfassend mindestens einen Port (11) zur Verbindung mit einem Kommunikationsnetzwerk (1), das kommunizierend mit mindestens einem Client-Endgerät (20) und mindestens einem zweiten Server (30) verbunden ist, einen Speicher (16) mit einem Speicherteil zum Speichern von Verweisdaten auf Seiteninformationen in anderen Servern, Empfangsmittel (12) zum Empfangen von Nachrichten über den mindestens einen Port (11) und Sendemittel (13) zum Senden von Nachrichten, wobei in dem Speicher (16) ein Verweisdatenelement (18) auf in dem mindestens einen zweiten Server (30) anwesende Seiteninformationen (39) gespeichert ist, wobei der Netzwerkserver (10) ferner dafür ausgelegt ist, die Verweisdaten (18) über den mindestens einen Port (11) aus dem Speicher (16) zu dem mindestens einen Client-Endgerät (20) zu senden, **dadurch gekennzeichnet, daß** der Netzwerkserver (10) ferner dafür ausgelegt ist, Seiteninformationen (39), die zu den Verweisdaten (18) gehören, aus dem Speicher (36) des mindestens einen zweiten Servers (30) über den mindestens einen Port (11) des mindestens einen Client-Endgeräts (20) zu empfangen, und daß der Netzwerkserver (10) mit Anpassungsmitteln (14) ausgestattet ist, die dafür ausgelegt sind, die Verweisdaten (18) in dem Speicher (16) als Reaktion auf den Empfang eines in den empfangenen Seiteninformationen (39) enthaltenen Statusindikators (37) aus dem Client-Endgerät (20) anzupassen.

2. Netzwerkserver nach Anspruch 1, **dadurch gekennzeichnet, daß** der Netzwerkserver (10) mit Verifikationsmitteln (15) zum Verifizieren der Korrektheit des über das mindestens eine Client-Endgerät (20) empfangenen Statusindikators (37) in dem mindestens einen zweiten Server (30) ausgestattet ist.

3. Netzwerkserver nach Anspruch 1 oder 2, **dadurch gekennzeichnet, daß** der Netzwerkserver (10) dafür ausgelegt ist, einen in dem Statusindikator (37) enthaltenen Bewegungsindikator zu lesen, der mit einem neuen Verweisdatenelement versehen ist.

4. Netzwerkserver nach einem der vorhergehenden Ansprüche, **dadurch gekennzeichnet, daß** der Netzwerkserver (10) dafür ausgelegt ist, einen in dem Statusindikator (37) enthaltenen Abbruchindikator zu lesen.

5. Netzwerkserver nach einem der vorhergehenden Ansprüche, **dadurch gekennzeichnet, daß** der Netzwerkserver (10) dafür ausgelegt ist, die Erlaubnis des Eigentümers der Verweisdaten (18) für deren Anpassung zu erhalten.

6. Verfahren zum Anpassen von Verweisdaten wie etwa URL-Links, die in einem Speicher (16) eines Netzwerkservers (10) gespeichert sind, der zu einem Kommunikationsnetzwerk (1) mit mindestens einem Client-Endgerät (20) und mindestens einem zweiten Server (30) gehört, **dadurch gekennzeichnet, daß** der Netzwerkserver (10) Seiteninformationen (39) empfängt, die aus dem mindestens einen Client-Endgerät (20) stammen, das zu einem Verweisdatenelement (18) gehört, das in dem Speicher (16) gespeichert wird, und daß der Netzwerkserver (10) die Verweisdaten (18) in dem Speicher (16) als Reaktion auf den Empfang eines in den Seiteninformationen (39) enthaltenen Statusindikators (37) aus dem Client-Endgerät anpaßt.

7. Verfahren nach Anspruch 6, **dadurch gekennzeichnet, daß** der Netzwerkserver (10) die Korrektheit des über das mindestens eine Client-Endgerät (20) empfangenen Statusindikators (37) in dem mindestens einen zweiten Server (30) verifiziert.

8. Verfahren nach Anspruch 6 oder 7, **dadurch gekennzeichnet, daß** der Netzwerkserver Erlaubnis von dem Eigentümer der Verweisdaten (18) für deren Anpassung erhält.

9. Verfahren nach einem der Ansprüche 6-8, **dadurch gekennzeichnet, daß** das mindestens eine Client-Endgerät (20) die Seiteninformationen (39) automatisch zu dem Netzwerkserver (10) sendet.

10. Computernetzwerk, das mit mindestens einem Netzwerkserver (10) nach einem der Ansprüche 1-5, mindestens einem zweiten Server (30) und mindestens einem Client-Endgerät (20) ausgestattet ist.

11. Web-Browser (25) eines Client-Endgeräts (20) zur Verwendung mit dem Netzwerkserver (10) nach mindestens einem der Ansprüche 1-5, der dafür ausgelegt ist, den Statusindikator automatisch zu dem Netzwerkserver weiterzuleiten.

## Revendications

1. Serveur de réseau pour adapter des données de référence, telles que des liens URL, comprenant au moins un port (11) pour la connexion à un réseau de communication (1), lequel est connecté pour la communication à au moins un terminal client (20) et à au moins un deuxième serveur (30), une mémoire (16) ayant une section de mémoire pour le stockage de données de référence à des informations d'appel dans d'autres serveurs, un moyen de réception (12) pour recevoir des messages par l'intermédiaire de l'au moins un port (11) et un moyen de transmission (13) pour transmettre des messages, dans lequel dans la mémoire (16) une donnée de référence (18) à des informations d'appel (39) présentes dans l'au moins un deuxième serveur (30) est stockée, dans lequel le serveur de réseau (10) est en outre équipé pour transmettre les données de référence (18) par l'intermédiaire de l'au moins un port (11) depuis la mémoire (16) à l'au moins un terminal client (20), **caractérisé en ce que** le serveur de réseau (10) est équipé en outre pour recevoir des informations d'appel (39) appartenant aux données de référence (18) depuis la mémoire (36) de l'au moins un deuxième serveur (30) par l'intermédiaire de l'au moins un port (11) de l'au moins un terminal client (20), et **en ce que** le serveur de réseau (10) est doté de moyens d'adaptation (14) qui sont équipés pour adapter les données de référence (18) dans la mémoire (16) en réponse à la réception d'un indicateur d'état (37) depuis le terminal client inclus dans les informations d'appel reçues (39).

2. Serveur de réseau selon la revendication 1, **caractérisé en ce que** le serveur de réseau (10) est équipé de moyens de vérification (15) pour vérifier au niveau au moins du deuxième serveur (30) l'exactitude de l'indicateur d'état (37) reçu par l'intermédiaire de l'au moins un terminal client (20).

3. Serveur de réseau selon la revendication 1 ou 2, **caractérisé en ce que** le serveur de réseau (10) est équipé pour lire un indicateur de mouvement inclus dans l'indicateur d'état (37), fourni avec une nouvelle donnée de référence.

4. Serveur de réseau selon l'une quelconque des revendications précédentes, **caractérisé en ce que** le serveur de réseau (10) est équipé pour lire un indicateur d'annulation inclus dans l'indicateur d'état (37).

5. Serveur de réseau selon l'une des revendications précédentes, **caractérisé en ce que** le serveur de réseau (10) est équipé pour obtenir du propriétaire des données de référence (18) une permission d'adapter celles-ci.

6. Procédé pour adapter des données de référence, telles que des liens URL, lesquelles sont stockées dans une mémoire (16) d'un serveur de réseau (10), qui appartient à un réseau de communication (1) ayant au moins un terminal client (20) et au moins un deuxième serveur (30), **caractérisé en ce que** le serveur de réseau (10) reçoit des informations d'appel (39) provenant de l'au moins un terminal client (20) appartenant à une donnée de référence (18), laquelle est stockée dans la mémoire (16), et **en ce que** le serveur de réseau (10) adapte la donnée de référence (18) dans la mémoire (16) en réponse à la réception d'un indicateur d'état (37) depuis le terminal client inclus dans les informations d'appel (39).

7. Procédé selon la revendication 6, **caractérisé en ce que** le serveur de réseau (10) vérifie l'exactitude de l'indicateur d'état (37) reçu par l'intermédiaire de l'au moins un terminal client (20) au niveau au moins de l'au moins un deuxième serveur (30).

8. Procédé selon la revendication 6 ou 7, **caractérisé en ce que** le serveur de réseau obtient du titulaire des données de référence (18) une permission d'adaptation de celles-ci.

9. Procédé selon l'une quelconque des revendications 6 à 8, **caractérisé en ce que** l'au moins un terminal client (20) envoie automatiquement les informations d'appel (39) au serveur de réseau (10).

10. Réseau informatique, doté d'au moins un serveur de réseau (10) selon l'une quelconque des revendications 1 à 5, au moins un deuxième serveur de réseau (30) et au moins un terminal client (20).

11. Navigateur web (25) d'un terminal client (20) destiné à être utilisé avec le serveur de réseau (10) conformément à une ou plusieurs des revendications 1 à 5, configuré pour passer automatiquement l'indicateur d'état au serveur de réseau.
